# EUROPEAN PATENT SPECIFICATION

(11) **EP 3 144 115 B1**
(45) Date of publication and mention of the grant of the patent: **16.12.2020**
(21) Application number: 16189271.6
(22) Date of filing: 16.09.2016
(51) Int. Cl.: B27B 5/06, B23D 47/04

(54) **SECTIONING APPARATUS FOR PANELS AND ITS USE**
TEILUNGSVORRICHTUNG FÜR PLATTEN UND IHRE VERWENDUNG
APPAREIL DE COUPE POUR PANNEAUX ET SON UTILISATION

(30) Priority: 16.09.2015 IT UB20153668
(43) Date of publication of application: 22.03.2017
(73) Proprietor: Prisma S.r.l., 33078 San Vito al Tagliamento (PN) (IT)
(72) Inventor: Pellegrini, Gian Luca, 33080 Cimpello di Fiume Veneto (PN) (IT)
(74) Representative: Petraz, Gilberto Luigi

(56) References cited:
- EP-A1- 0 361 127
- EP-A1- 1 510 276
- EP-A1- 2 011 612
- EP-A1- 2 193 895
- EP-A1- 3 106 274
- WO-A1-03/078097
- DE-A1- 2 522 633
- DE-A1- 19 843 499
- US-A- 3 566 932
- US-A- 4 879 931

## Description

### FIELD OF THE INVENTION

The present invention concerns a sectioning apparatus according to the preamble of claim 1, for sectioning panels, and a method of using it, said apparatus being usable by way of example in the wood industry.

In particular, the apparatus and its method can be used for example to section wooden panels, obtained by compacting scales of wood of various types and sizes, or multilayer, or other type.

### BACKGROUND OF THE INVENTION

Such a sectioning apparatus is known from US4879931A.

Apparatuses for sectioning panels are known, in particular in the wood industry, in which the panels to be sectioned are positioned on and attached to a feed bench. Subsequently, the panels are thrust by suitable thrust elements and/or belts and/or tracks toward groups of sectioning blades positioned at programmable distances.

In order to perform a plurality of sectioning operations one close to the other, known sectioning apparatuses require the same number of groups of blades as there are sectioning operations to be carried out. The groups of blades individually have a bulk that prevents sectioning operations one close to the other in limited spaces. Indeed, in some circumstances, it often happens that the sectioning groups are misaligned with respect to each other in the longitudinal and transverse feed directions of the panel. Especially in those cases where a lot of sectioning operations one close to the other are provided, this entails a great bulk of the apparatus in its entirety, and consequently high costs both due to the number of sectioning groups provided and also for the costs of investment and maintenance relating to the spaces used.

Another disadvantage relating to the misaligned positioning of the sectioning groups is that, following the sequential entrance of the sectioning elements in the panel, oscillations of the panel can occur that can damage the elements that make up the apparatus and/or the panel itself.

In known sectioning apparatuses, depending on the thickness of the panels, in order to prevent unwanted shredding of the panel, it is necessary to adjust the entrance height of the sectioning groups. Consequently, if panels with different thickness are to be worked, the operators necessarily have to adjust the sectioning groups individually, and consequently use time so that the production line has to be temporarily halted.

Furthermore, when the panels have inclined or irregular edges, since it is not possible to adjust the entrance height of the sectioning groups in a controlled manner during the feed of the panel, shredding often occurs on the edges of the panels.

Another disadvantage of the state of the art is that, in order to feed the panels in a controlled manner, the feed means require continuous maintenance operations to prevent the non-uniform wear over time from causing an incorrect feed of the panel. Moreover, when the panels have inclined or irregular edges, the thruster elements, not finding a stable and uniform surface to support them, do not actuate a uniform thrust of the panel in the direction of feed.

Furthermore, known sectioning apparatuses need long times, and not always constant, for the alignment, attachment and transfer of the panels to other possible work steps by the operators, which entails a non-cadenced production of the sectioned panels produced. This entails a difficult timing for the operations located upstream and downstream of known apparatuses.

Moreover, when the sectioning operations are not complete, due to an incorrect adjustment of the sectioning groups, the operator needs other operations to modify the height of the sectioning groups and to re-align the panel so as to follow the previous trajectory, with a consequent loss of time.

For example, document DE 198.43.499 describes an apparatus for sectioning panels provided with two transport belts positioned facing each other and configured to transport a panel between the two transport belts to be sectioned.

This known solution is structurally complex and requires a long time to set and assemble, since it provides that one of the two transport belts is disposed on the same side as the sectioning groups, making the maintenance operations of the sectioning apparatus complicated as well.

Another known solution, described in EP 2.011.612 concerns a sectioning apparatus provided with a pressure plate which cooperates with opposite support means to move a panel in a sectioning direction.

In this case, the movement of the panel to be sectioned occurs in one conveying direction only, defined by guide means which are circular continuous conveyor elements.

However, due to the presence of a single central pressure plate, this solution does not allow to maintain a univocal position of the panel, which is easily subjected to misalignment, for example caused by the engagement with the sectioning heads during the advance of the panel in the sectioning direction.

This is also accentuated by the fact that the panel is not fixed to the conveyor during sectioning, but is only moved in the sectioning direction above the conveyor, as if it were thrust.

Furthermore, in this case too, the sectioning apparatus provides to make only one sectioning pass, and this makes the times for making successive sectioning operations very long, since an operator has to remove the sectioned parts and introduce them to the entrance of the apparatus.

There is therefore a need to perfect the state of the art and make available a sectioning apparatus for panels and corresponding method which overcome at least one of the disadvantages of the state of the art.

In particular, one purpose of the present invention is to obtain a sectioning apparatus for panels and corresponding method which allow to make a plurality of sectioning operations one close to the other in limited spaces.

Another purpose of the present invention is to perfect a sectioning apparatus and corresponding method which allow to obtain a cadenced production of sectioned panels, also with irregular edges, without imperfections and/or shredding, in order to optimize the in-line production times, reduce panels sectioned incorrectly and reduce the overall times and costs associated with the production line in its entirety.

The Applicant has devised, tested and embodied the present invention to overcome the shortcomings of the state of the art and to obtain these and other purposes and advantages.

### SUMMARY OF THE INVENTION

The present invention is defined by the features of the independent claims, while the dependent claims define preferred embodiments.

According to an example, the movement unit comprises a plurality of gripping units able to remove, release and move the panels in a controlled manner, and from above, in the direction of sectioning.

In addition, the movement unit is able to keep the planarity of the panel correct, at least during the essential steps of positioning and sectioning.

According to another example, the apparatus provides that the sectioning groups can be adjusted, manually or automatically, at least in positioning on the plane orthogonal to the sectioning axis of the panel.

According to another example, the apparatus can be coupled with other apparatuses downstream and/or upstream in order to carry out other workings.

Due to their structure and/or autonomous adjustment, the sectioning groups do not create shreds when the panel enters and/or exits.

According to a variant, the profile of the vertical position, which the panel assumes on each occasion, during the sectioning step, with respect to the sectioning groups, is such as to contribute to the best cutting.

Various examples allow obtaining of sectioned elements having a constant width and/or varied widths in the same panel.

Various examples allow obtaining of sectioned elements even with a very limited width.

The method of claim 6 allows to carry out, on the same panel, repeated sectioning operations in succession with equal and/or different spacings.

According to an embodiment, several sectioning groups can be provided.

It is also another characteristic of the present invention that all the operations can be totally automated.

### BRIEF DESCRIPTION OF THE DRAWINGS

These and other characteristics of the present invention will become apparent from the following description of some embodiments, given as a non-restrictive example with reference to the attached drawings wherein:
- fig. 1 is an overall lateral view of the sectioning apparatus for panels according to the present invention;
- fig. 2 is a front view in the direction defined by the arrow Fr in fig. 1 of the sectioning apparatus for panels;

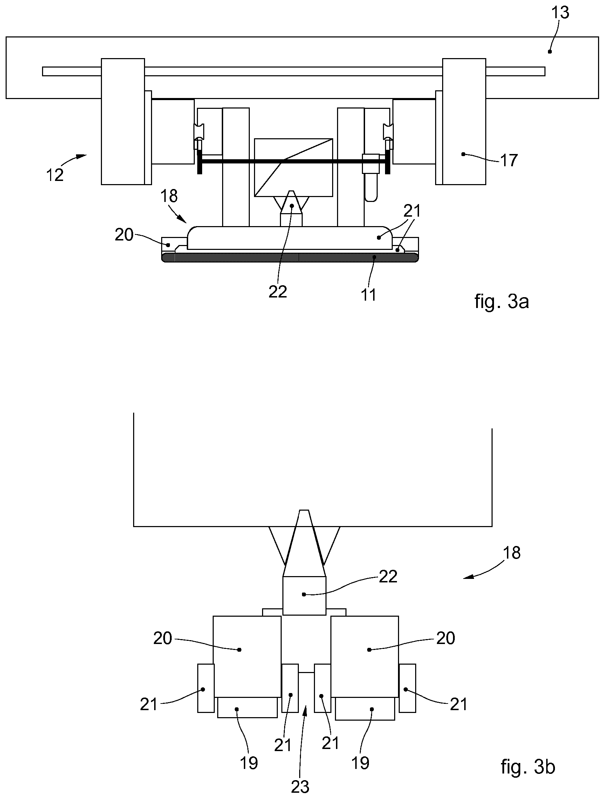

- fig. 3a is a lateral view of a movement unit for panels according to the present invention;
- fig. 3b is a lateral view of a gripping unit according to the present invention;

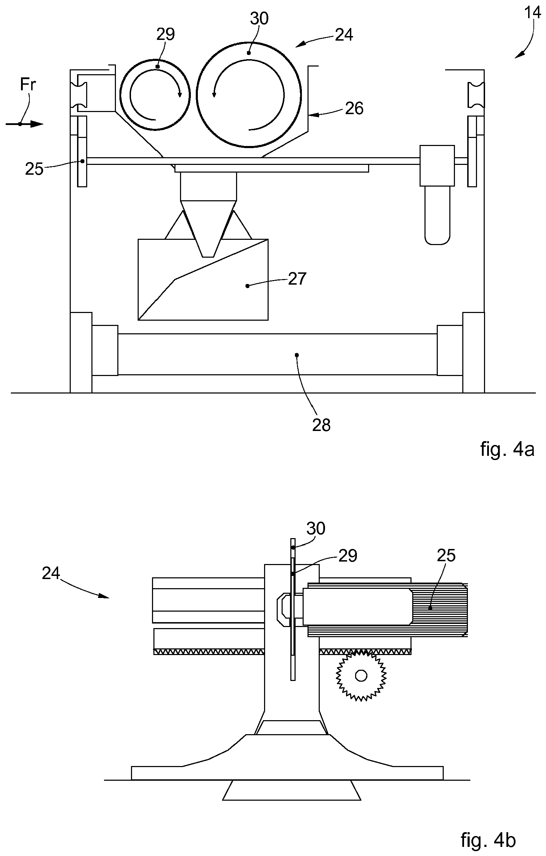

- fig. 4a is a lateral view of a sectioning unit according to the present invention,
- fig. 4b is a front view in the direction defined by the arrow Fr in fig. 4a of a sectioning unit according to the present invention;
- figs. 5a, 5b and 5c show three examples of a method for the sectioning of panels according to the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

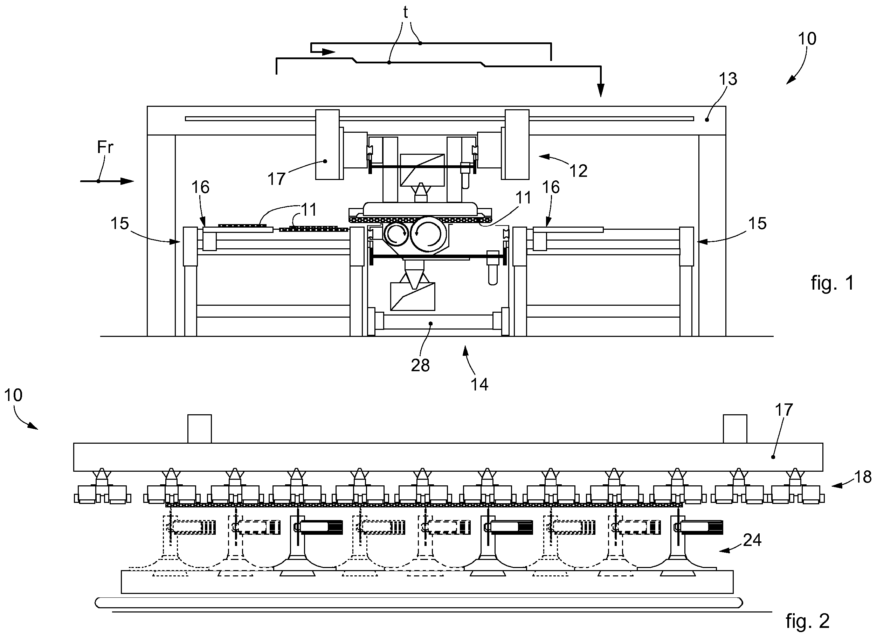

With reference to fig. 1, a sectioning apparatus 10 for panels 11 comprises at least a movement unit 12 installed moveable in a controlled manner on at least a bridge structure 13 and at least a sectioning group 14. It also comprises, by way of example, at least a pair of transporters 15 for entering and/or exiting panels 11, each of which is equipped with suitable aligning systems 16 capable of making the panels 11 adjacent and/or non-adjacent.

The movement unit 12 comprises at least a mobile slider 17 positionable in a controlled manner both vertically and transversely to the bridge structure 13.

The movement unit 12 comprises at least a gripping unit 18 cooperating with at least a fixed abutment 21 that serve to have constant the reference position zero of the upper plane of the panel 11.

Knowing the zero position, or rather, knowing the correct position of the surface of the panel 11, is necessary for a correct management of all the steps, in particular the sectioning step, also in relation to the geometric and physical type of the panel 11.

The gripping units 18 can be fixed on the movement unit 12, or positionable along it, depending on the position of the cuts.

The movement unit 12 also comprises, possibly associated with the gripping units 18, at least a system to generate a depression, which operates on sucker type anchoring means 19, for example consisting of flexible washers, single suckers, lip-type or other type suitable to guarantee a perfect adherence and seal on the panel.

According to the invention, the gripping unit 18 comprises two bars 20 which support and position the sucker units 19. Once positioned on the upper surface of a panel 11, the bars 20 are able to anchor stably on said surface, positioning the panel 11 with respect to zero position. In this way the panel 11 can be moved, in a controlled and desired manner, in any direction, and therefore also in the sectioning direction Fr defined by way of example in fig. 1, and can be positioned vertically without damage on the contact surface with the sucker units 19, at the same time keeping the zero position fixed and stable.

It is clear that, without departing from the field of the present invention, the sectioning direction Fr defined in fig. 1 is only one of the possible sectioning directions of the panel 11 that the movement unit 12 is able to travel.

The fixed abutments 21 allow both to control the vertical position also in relation on each occasion with the sectioning groups 14, and also to correctly align the panel on the horizontal plane; they also guarantee a stable and controlled contrast during the sectioning step.

According to an example not according to the invention, instead of the fixed abutments 21, a continuous control system can be provided to control the position, for example using laser or another known system.

In cooperation with the gripping unit 18, according to the invention, a suction pipe 22 is provided, able to suck up the sectioning residues in the interspace 23 between the bars 20.

The gripping units 18, like the slider 17 on which they are attached, are advantageously mobile, individually in a controlled and automated manner, so as to at least adapt their position with respect to the sectioning groups 14 as a function of the thickness of the panel 11 being worked and of the cuts made on it. It should also be noted that the movement unit 12 is able to remove, maintain and move two or more adjacent panels simultaneously, depending on the reciprocal sizes.

The sectioning group 14 by way of example comprises at least a sectioning unit 24 mobile in a programmable manner both along the vertical axis for the correct positioning of the cutting members which it supports and positions, and also transversely to the sectioning direction Fr, to obtain the desired sectioning widths, by means of at least one maneuvering mechanism 25.

The sectioning group 14 advantageously also comprises at least one suction hood with a connector 26 to a lower compartment 27, to collect the residues produced by sectioning.

Advantageously, a transporter 28 can be provided, to extract the off-cuts of the panels worked, located in the lower part of the sectioning unit 24.

The sectioning unit 24 comprises two blades, advantageously specialized, for example disc type, a cutter 29 and a shredder 30, which are advantageously counter-rotating. The cutter 29 rotates in the direction of feed of the panel 11 and allows to make a surface cut that is sufficiently ample and is able to facilitate the entrance and cutting of the shredder 30, preventing cuts that are not neat or are shredded. The shredder 30 rotates in the opposite direction to the feed of the panel 11 and, since it has a bigger diameter than the cutter 29, protrudes above the thickness of the panel 11 so as to section it completely.

The sectioning units 24 are advantageously controlled synergically together with the movement unit 12, so as to perform the sectioning operations in the desired number, with the desired characteristics and at the desired distances.

According to one embodiment of the present invention, the method relating to the present invention comprises, depending on the sequence provided on each occasion:
- an initial setting step;
- introduction of the cutting data;
- gripping of at least a panel by the movement unit 12 and putting it in position to begin cutting;
- at least a step in which the movement unit 12 positions the panel 11 with respect to the sectioning group 14, as a function of the thickness of the panel 11, and moves along the direction of sectioning Fr;
- in the case of multiple sectioning operations, at least a return movement step of the panel in the inverse direction of Fr to the entrance position to the sectioning units 24;
- possible automated positioning of the sectioning unit 24;
- at least a second sectioning step;
- at least a step of releasing the sectioned elements.

With reference to fig. 1, a trajectory t is shown by way of example, indicated by continuous-line arrows, which the movement unit 12 can follow with the panel 11 according to the characteristics thereof. In particular, the trajectory t comprises a first segment of advance in the sectioning direction Fr, if necessary subject to adjustments of its vertical position, and a second return segment in the opposite direction to the first segment.

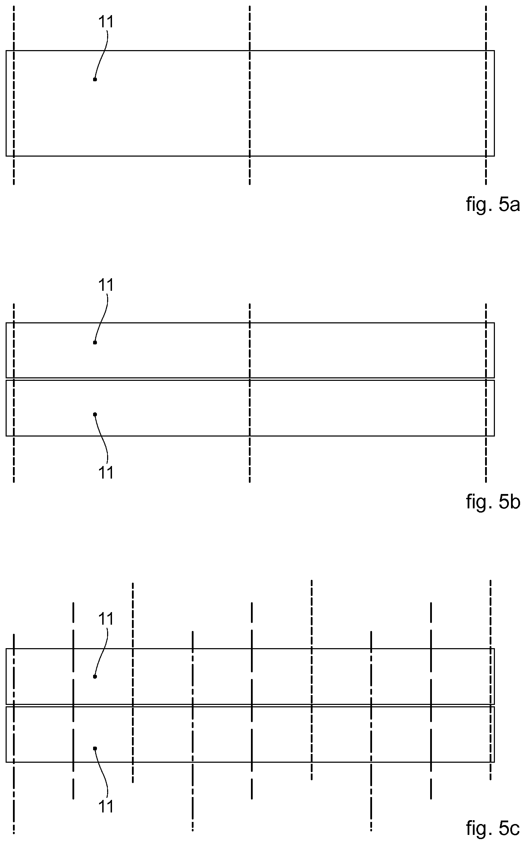

Figs. 5a, 5b and 5c indicate by way of example the positions of the sectioning units 24 in three possible sectioning passes of the panel 11 moved by the movement unit 12. In particular, the line of short dashes corresponds to the first pass, the line of long dashes corresponds to the second pass and the line of dots and dashes corresponds to the third pass.

With reference to figs. 5a, 5b and 5c, a series of three non-restrictive examples are shown supplied by way of example of some methods according to the present invention. In each diagram the lines of dashes represent the sectioning trajectories of the sectioning units 24 in the successive passes of the panel 11 moved by the movement unit 12.

It should be noted that, due to the way it is structured, the apparatus allows a precise and stable movement of the panel 11 which does not entail any waiting times to adjust the sectioning units 24 since this operation is performed during the return pass of the panel 11 after the sectioning pass which holds the sectioned panel until the end of all the necessary passes.

Fig. 5a shows the plan diagram of a simple sectioning with three sectioning operations that obtains two sectioned panels. Fig. 5b shows the same diagram as fig. 5a, but with two adjacent panels 11 which obtains four sectioned panels. Fig. 5c shows the same diagram as fig. 5b, but with three successive passes, moving the sectioning units 24 which obtains sixteen sectioned panels 11.

It is clear that modifications and/or additions of parts may be made to the apparatus for sectioning panels and corresponding method as described heretofore, without departing from the scope of the present invention as defined by the claims.

## Claims

1. Sectioning apparatus (10) for panels (11) comprising at least one movement unit (12) mobile in a controlled manner along at least a bridge structure (13) and at least one sectioning group (14) positionable with respect to the movement unit (12), wherein said movement unit (12) comprises at least a gripping unit (18) and at least a fixed abutment (21) cooperating with an upper surface of said at least one panel (11) to define a zero position and the planarity of said at least one panel (11), said at least one gripping unit (18) being of the depression type and positioned above said at least one panel (11) and being associable with the upper surface of said at least one panel (11), wherein said at least one gripping unit (18) is attached to a slider (17) and both are movable in a controlled and automated manner, so as at least to adapt their position with respect to the sectioning group (14) as a function of the thickness of said panel (11) being worked and of the cuts made on it, **characterized in that** said apparatus comprises a plurality of fixed abutments (21), said gripping unit (18) comprises two bars (20) each supporting a respective sucker type anchoring means (19) alternating with said fixed abutments (21), wherein, in cooperation with said gripping unit (18), a suction pipe (22) is provided for sucking-up the sectioning residues in an interspace (23) between said bars (20).

2. Apparatus as in claim 1, **characterized in that** said movement unit (12) has a plurality of said gripping units (18) of the depression type and associable in the desired position to the upper face of the panel (11), said movement unit (12) being controlled in the position in height and/or at least along the sectioning direction (Fr).

3. Apparatus as in claims 1 or 2, **characterized in that** said sectioning group (14) has at least one sectioning unit (24) at the upper part thereof, provided with at least one cutter (29) and at least one shredder (30) positionable at height.

4. Apparatus as in any claim hereinbefore, **characterized in that** said sectioning group (14) can be positioned transversely to the direction of feeding of the movement unit (12).

5. Apparatus as in any claim hereinbefore, **characterized in that** said movement unit (12) and said sectioning group (14) cooperate with at least one transporter (15) at entrance and/or at exit.

6. Method to section panels (11) with a sectioning apparatus as in claim 1, **characterized in that** it comprises at least:
- an initial setting step of the sectioning apparatus (10);
- introduction of the cutting data into the control and command unit;
- gripping by means of a depression provided by at least a gripping unit (18) and operating on the upper part of at least a panel (11) by the movement unit (12) and putting the panel (11) in position to begin sectioning;
- at least a step in which the movement unit (12) positions the panel (11) with respect to the sectioning group (14) placed below a workpiece support plane;
- said movement unit (12) moves along the direction of sectioning (Fr) until the end of sectioning;
- return of said movement unit (12) taking said panel (11) with it to the start-of-sectioning position for possible subsequent sectioning or end of sectioning.

7. Method to section panels (11) as in claim 6, **characterized in that** it comprises at least a possible automated repositioning of the sectioning unit (24) in a direction orthogonal to the sectioning itself, and at least a second sectioning step.

8. Method to section panels (11) as in either of claims 6 or 7, **characterized in that** it comprises at least a step of releasing the sectioned elements to a transporter (15).

9. Method as in any of the claims from 6 to 8, **characterized in that** the operation to adjust the position of the sectioning unit (24) occurs at the same time as the return movement of the panel (11).

## Patentansprüche

1. Teilungsvorrichtung (10) für Platten (11), umfassend mindestens eine Bewegungseinheit (12), die entlang mindestens einer Brückenstruktur (13) in kontrollierter Art und Weise beweglich ist, und mindestens eine Teilungsgruppe (14), die in Bezug auf die Bewegungseinheit (12) positionierbar ist, wobei die Bewegungseinheit (12) mindestens eine Greifeinheit (18) und mindestens ein feststehendes Widerlager (21) umfasst, das mit einer oberen Oberfläche der mindestens einen Platte (11) kooperiert, um eine Null-Position und die Planarität der mindestens einen Platte (11) zu definieren, wobei die mindestens eine Greifeinheit (18) vom Unterdrucktyp ist und oberhalb der mindestens eine Platte (11) positioniert ist und mit der oberen Oberfläche der mindestens einen Platte (11) verbunden werden kann, wobei die mindestens eine Greifeinheit (18) an einem Gleitstück (17) befestigt ist und beide in kontrollierter und automatisierter Art und Weise beweglich sind, so dass sie wenigstens ihre Position in Bezug auf die Teilungsgruppe (14) in Abhängigkeit von der Dicke der bearbeiteten Platte (11) und der auf ihr vorgenommenen Teilungen anpassen, **dadurch gekennzeichnet, dass** die Vorrichtung eine Vielzahl an feststehenden Widerlagern (21) umfasst, die Greifeinheit (18) zwei Stangen (20) umfasst, von denen jede, alternierend mit den feststehenden Widerlagern (21), ein jeweiliges Verankerungsmittel (19) vom Saugtyp trägt, wobei, in Kooperation mit der Greifeinheit (18), eine Saugleitung (22) bereitgestellt wird, um die Schnittreste in einem Zwischenraum (23) zwischen den Stangen (20) aufzusaugen.

2. Vorrichtung gemäß Anspruch 1, **dadurch gekennzeichnet, dass** die Bewegungseinheit (12) eine Vielzahl der Greifeinheiten (18) vom Unterdrucktyp aufweist, die in der gewünschten Position mit der oberen Oberfläche der Platte (11) verbunden werden können, wobei die Bewegungseinheit (12) in der Höhenposition und/oder zumindest entlang der Teilungsrichtung (Fr) gesteuert wird.

3. Vorrichtung gemäß Anspruch 1 oder 2, **dadurch gekennzeichnet, dass** die Teilungsgruppe (14) mindestens eine Teilungseinheit (24) an ihrem oberen Abschnitt aufweist, die mit mindestens einem Schneidwerkzeug (29) und mindestens einer in der Höhe positionierbaren Zerkleinerungsvorrichtung (30) ausgestattet ist.

4. Vorrichtung gemäß irgendeinem vorhergehenden Anspruch, **dadurch gekennzeichnet, dass** die Teilungsgruppe (14) quer zu der Zuführungsrichtung der Bewegungseinheit (12) positioniert werden kann.

5. Vorrichtung gemäß irgendeinem vorhergehenden Anspruch, **dadurch gekennzeichnet, dass** die Bewegungseinheit (12) und die Teilungsgruppe (14) mit mindestens einer Transportvorrichtung (15) am Eingang und/oder am Ausgang kooperieren.

6. Verfahren zur Teilung von Platten (11) mit einer Teilungsvorrichtung gemäß Anspruch 1, **dadurch gekennzeichnet, dass** es mindestens umfasst:
- einen initialen Einstellschritt der Teilungsvorrichtung (10);
- die Eingabe der Schneiddaten in die Steuer- und Befehlseinheit;
- das Greifen mittels eines Unterdrucks, der durch mindestens eine Greifeinheit (18) bereitgestellt wird, und Bearbeiten des oberen Abschnitts mindestens einer Platte (11) durch die Bewegungseinheit (12) und das Positionieren der Platte (11) zum Starten der Teilung;
- mindestens einen Schritt, in dem die Bewegungseinheit (12) die Platte (11) in Bezug auf die unterhalb einer Werkstück-Auflageebene platzierte Teilungsgruppe (14) positioniert;
- das Bewegen der Bewegungseinheit (12) entlang der Teilungsrichtung (Fr) bis zum Ende der Teilung;
- das Zurückkehren der Bewegungseinheit (12) unter Mitnahme der Platte (11) zur Teilungsstartposition zur etwaigen nachfolgenden Teilung oder Beenden der Teilung.

7. Verfahren zur Teilung von Platten (11) gemäß Anspruch 6, **dadurch gekennzeichnet, dass** es mindestens eine mögliche automatisierte Neupositionierung der Teilungseinheit (24) in einer Richtung orthogonal zur Teilung selbst und mindestens einen zweiten Teilungsschritt umfasst.

8. Verfahren zur Teilung von Platten (11) gemäß Anspruch 6 oder 7, **dadurch gekennzeichnet, dass** es mindestens einen Schritt der Freigabe der geteilten Elemente an eine Transportvorrichtung (15) umfasst.

9. Verfahren gemäß irgendeinem der Ansprüche 6 bis 8, **dadurch gekennzeichnet, dass** der Vorgang der Positionseinstellung der Teilungseinheit (24) zum gleichen Zeitpunkt erfolgt wie die Rückkehrbewegung der Platte (11).

## Revendications

1. Appareil de coupe (10) pour des panneaux (11) comprenant au moins une unité de déplacement (12) mobile de manière commandée le long d'au moins une structure de pont (13) et au moins un groupe de coupe (14) pouvant être positionné par rapport à l'unité de déplacement (12), dans lequel ladite unité de déplacement (12) comprend au moins une unité de préhension (18) et au moins une butée fixe (21) coopérant avec une surface supérieure dudit au moins un panneau (11) pour définir une position zéro et la planéité dudit au moins un panneau (11), ladite au moins une unité de préhension (18) étant du type à enfoncement et positionnée au-dessus dudit au moins un panneau (11) et pouvant être associée à la surface supérieure dudit au moins un panneau (11), dans lequel ladite au moins une unité de préhension (18) est fixée à un coulisseau (17) et les deux sont mobiles de manière commandée et automatisée, de manière au moins à adapter leur position par rapport au groupe de coupe (14) en fonction de l'épaisseur dudit panneau (11) devant être travaillé et des entailles qui y sont effectuées, **caractérisé en ce que** ledit appareil comprend une pluralité de butées fixes (21), ladite unité de préhension (18) comprend deux barres (20) supportant chacune des moyens d'ancrage de type ventouse respectifs (19) alternant avec lesdites butées fixes (21), dans lequel en coopération avec ladite unité de préhension (18), un tuyau d'aspiration (22) est prévu pour aspirer les résidus de coupe dans un espace intermédiaire (23) entre lesdites barres (20).

2. Appareil selon la revendication 1, **caractérisé en ce que** ladite unité de déplacement (12) comporte une pluralité desdites unités de préhension (18) du type à enfoncement et pouvant être associées dans la position souhaitée à la face supérieure du panneau (11), ladite unit de déplacement (12) étant commandée dans la position en hauteur et/ou au moins le long de la direction de coupe (Fr).

3. Appareil selon les revendications 1 ou 2, **caractérisé en ce que** ledit groupe de coupe (14) comporte au moins une unité de coupe (24) au niveau de sa partie supérieure, munie d'au moins un couteau (29) et d'au moins une déchiqueteuse (30) positionnables en hauteur.

4. Appareil selon l'une quelconque des revendications précédentes, **caractérisé en ce que** ledit groupe de coupe (14) peut être positionné transversalement à la direction d'alimentation de l'unité de déplacement (12).

5. Appareil selon l'une quelconque des revendications précédentes, **caractérisé en ce que** ladite unité de déplacement (12) et ledit groupe de coupe (14) coopèrent avec au moins un dispositif de transport (15) au niveau de l'entrée et/ou de la sortie.

6. Procédé de coupe de panneaux (11) avec un appareil de coupe selon la revendication 1, **caractérisé en ce qu'**il comprend au moins :
- une étape de réglage initial de l'appareil de coupe (10) ;
- une introduction des données de coupe dans l'unité de contrôle et de commande ;
- une préhension au moyen d'un enfoncement fourni par au moins une unité de préhension (18) et opérant sur la partie supérieure d'au moins un panneau (11) par l'unité de déplacement (12) et mettant le panneau (11) en position pour commencer une coupe ;
- au moins une étape dans laquelle l'unité de déplacement (12) positionne le panneau (11) par rapport au groupe de coupe (14) placé sous un plan de support de pièce à usiner ;
- ladite unité de déplacement (12) se déplace selon la direction de coupe (Fr) jusqu'à la fin de la coupe ;
- un retour de ladite unité de déplacement (12) emmenant ledit panneau (11) avec elle vers la position de début de coupe pour une éventuelle coupe ultérieure ou fin de coupe.

7. Procédé de coupe de panneaux (11) selon la revendication 6, **caractérisé en ce qu'**il comprend au moins un éventuel repositionnement automatisé de l'unité de coupe (24) dans une direction orthogonale à la coupe elle-même, et au moins une seconde étape de coupe.

8. Procédé de coupe de panneaux (11) selon l'une des revendications 6 ou 7, **caractérisé en ce qu'**il comprend au moins une étape de libération des éléments coupés vers un dispositif de transport (15).

9. Procédé selon l'une quelconque des revendications 6 à 8, **caractérisée en ce que** l'opération d'ajustement de la position de l'unité de coupe (24) se produit en même temps que le déplacement de retour du panneau (11).
